# EUROPEAN PATENT APPLICATION

(11) **EP 4 398 436 A1**
(43) Date of publication of application: **10.07.2024**
(21) Application number: 23212838.9
(22) Date of filing: 28.11.2023
(51) Int. Cl.: H02J 3/32, H02J 7/34, H02J 1/10

(54) **ENERGY STORAGE SYSTEM AND CONTROL METHOD THEREOF**

(30) Priority: 01.12.2022 CN 202211537651
(71) Applicant: Delta Electronics (Shanghai) Co., Ltd., Shanghai 201209 (CN)
(72) Inventor: Chen, Haidong, Shanghai 201209 (CN); Wang, Yafeng, Shanghai 201209 (CN); Lu, Yansong, Shanghai 201209 (CN); Zhong, Linfeng, Shanghai 201209 (CN); Wang, Changyong, Shanghai 201209 (CN)
(74) Representative: Uexküll & Stolberg

(57) **Abstract**

An energy storage system (1, 1a, 1b) includes a DC bus (3), an energy storage converter (4), n first battery racks (5) and m energy storage units (6). The DC bus (3) has a positive bus (31) and a negative bus (32). The energy storage converter (4) is electrically connected to the DC bus (3). Each of the n first battery racks (5) is electrically connected between the positive bus (31) and the negative bus (32) directly. Each of the m energy storage units (6) includes a second battery rack (61) and a DC/DC converter (62). The DC/DC converter (62) is electrically connected between the corresponding second battery rack (61) and the DC bus (3). The DC/DC converter (62) performs electric energy conversion between the corresponding second battery rack (61) and the DC bus (3).

## Description

### FIELD OF THE INVENTION

The present disclosure relates to the field of energy storage, and more particularly to an energy storage system and a control method for the energy storage system.

### BACKGROUND OF THE INVENTION

A conventional energy storage system includes a plurality of battery racks and a plurality of bidirectional DC-DC converters. Each battery rack and the corresponding bidirectional DC-DC converter are connected with each other in series and collaboratively formed as a serial connection structure. Moreover, a plurality of serial connection structures are connected with a DC bus in parallel. Consequently, the charging/discharging functions can be achieved. However, when there is a step change in the energy storage system, for example the load suddenly increases or decreases or the power grid is in a low ride-through condition, a plurality of energy storage units (ESUs) composed of bidirectional DC-DC converters and battery racks cannot respond at the same time and respond in time. Consequently, some of the bidirectional DC-DC converters malfunction.

Therefore, there is a need of providing an energy storage system and a control method for the energy storage system in order to overcome the drawbacks of the conventional technologies.

### SUMMARY OF THE INVENTION

The present disclosure provides an energy storage system and a control method for the energy storage system.

In accordance with an aspect of the present disclosure, an energy storage system is provided. The energy storage system includes a DC bus, an energy storage converter, n first battery racks and m energy storage units, wherein n is a positive integer greater than or equal to 1, and m is a positive integer greater than or equal to 1. The DC bus has a positive bus and a negative bus. The energy storage converter is electrically connected to the DC bus, and configured to convert AC electric energy from an AC source into DC electric energy, or convert DC electric energy from the DC bus into AC electric energy. Each of the n first battery racks is electrically connected between the positive bus and the negative bus directly. Each of the m energy storage units includes a second battery rack and a DC/DC converter. The DC/DC converter is electrically connected between the corresponding second battery rack and the DC bus. The DC/DC converter is configured to perform electric energy conversion between the corresponding second battery rack and the DC bus.

In accordance with an aspect of the present disclosure, a control method for the energy storage system is provided. Firstly, a control module is provided. The control module is electrically connected with the DC bus, the n first battery racks and the second battery racks and the DC/DC converters of the m energy storage units. The control module controls an operation state of the DC/DC converter of each energy storage unit according to a power of the DC bus, a power of each first battery rack and a power of each second battery rack.

From the above descriptions, the present disclosure provides an energy storage system. The energy storage system includes n first battery racks and m energy storage units. Each energy storage unit includes a second battery rack and a DC/DC converter. In other words, the energy storage system of the present disclosure includes two types of topologies. In case that the energy storage system is subjected to a step change, the first battery rack directly connected to the DC bus can respond immediately. As a consequence, it can be assured that the voltage of the DC bus is not changed significantly in a certain time period. In this way, the control module has enough time to send current or voltage commands to the DC/DC converter to absorb or discharge the battery energy and achieve the smooth transition of the step change. Due to the electric energy storage efficacy and the buffering efficacy, the energy storage system can be operated at a stable output level even if the load fluctuates rapidly.

The above contents of the present disclosure will become more readily apparent to those ordinarily skilled in the art after reviewing the following detailed description and accompanying drawings, in which:

### BRIEF DESCRIPTION OF THE DRAWINGS

FIG. 1 is a schematic circuit diagram illustrating an energy storage system according to a first embodiment of the present disclosure;
FIG. 2 is a schematic circuit block diagram illustrating the control module of the energy storage system as shown in FIG. 1;
FIG. 3 is a schematic circuit diagram illustrating an energy storage system according to a second embodiment of the present disclosure;
FIG. 4 is a schematic circuit diagram illustrating an energy storage system according to a third embodiment of the present disclosure;
FIG. 5 illustrates a flowchart of a control method for an energy storage system according to an embodiment of the present disclosure;
FIG. 6 illustrates a flowchart of a control method for the energy storage system of the present disclosure while the operation mode of the energy storage system is switched to a discharging mode; and
FIG. 7 illustrates a flowchart of a control method for the energy storage system of the present disclosure while the operation mode of the energy storage system is switched to a charging mode.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

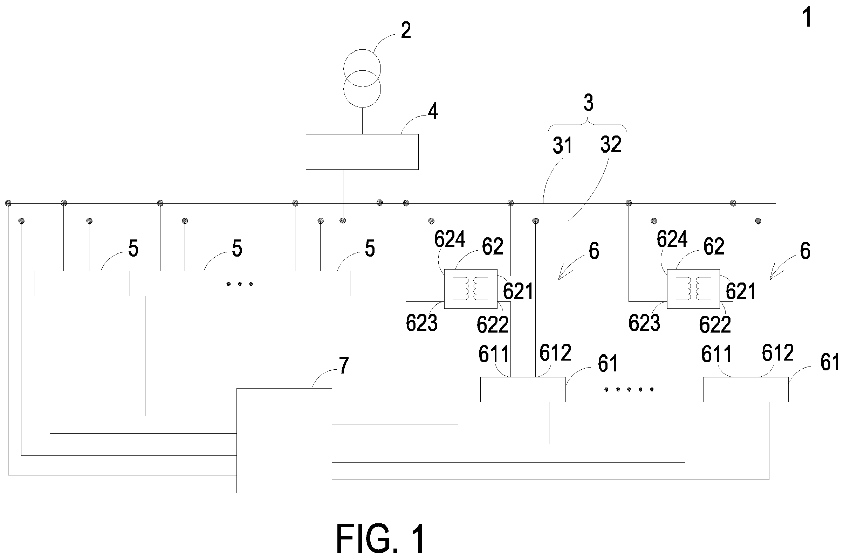

FIG. 1 is a schematic circuit diagram illustrating an energy storage system according to a first embodiment of the present disclosure. As shown in FIG. 1, the energy storage system 1 includes a DC bus 3, an energy storage converter 4, n first battery racks 5, m energy storage units 6 and a control unit 7, and n and m are positive integers greater than or equal to 1.

The DC bus 3 includes a positive bus 31 and a negative bus 32. The electric energy storage converter 4 is a bidirectional AC/DC converter. The electric energy storage converter 4 is electrically connected to the DC bus 3 or electrically connected between the power grid 2 and the DC bus 3. By the electric energy storage converter 4, the AC electric energy from an AC source (i.e., the power grid 2) is converted into DC electric energy. The DC electric energy is transmitted to the DC bus 3. In addition, by the electric energy storage converter 4, the DC electric energy from the DC bus 3 is converted into the AC electric energy. Each first battery rack 5 is electrically connected between the positive bus 31 and the negative bus 32 of the DC bus 3 directly. That is, each first battery rack 5 is directly coupled to the DC bus 3 without the need of being connected through any DC/DC converter. When the energy storage system 1 is in a charging mode, the n first battery racks 5 receive the DC electric energy from the DC bus 3, and the n first battery racks 5 are charged by the DC electric energy. When the energy storage system 1 is in a discharging mode, the n first battery racks 5 provide the DC electric energy to the DC bus 3.

Each energy storage unit 6 includes a second battery rack 61 and a DC/DC converter 62. The DC/DC converter 62 is electrically connected between the second battery rack 61 and the DC bus 3. The DC/DC converter 62 is used for performing power conversion between the second battery rack 61 and the DC bus 3.

The second battery rack 61 includes a positive conduction terminal 611 and a negative conduction terminal 612. The negative conduction terminal 612 of the second battery rack 61 is electrically connected with the negative bus 32 of the DC bus 3. In this embodiment, the DC/DC converter 62 is a bidirectional isolation converter. In some other embodiments, the DC/DC converter 62 is a voltage compensated converter or a current compensated converter. The DC/DC converter 62 includes a first positive terminal 621, a first negative terminal 622, a second positive terminal 623 and a second negative terminal 624.

Please refer to FIG. 1 again. The first positive terminal 621 of the DC/DC converter 62 is electrically connected with the positive bus 31 of the DC bus 3. The first negative terminal 622 of the DC/DC converter 62 is electrically connected with the positive conduction terminal 611 of the second battery rack 61. The second positive terminal 623 of the DC/DC converter 62 is electrically connected with the positive bus 31 of the DC bus 3. The second negative terminal 624 of the DC/DC converter 62 is electrically connected with the negative bus 32 of the DC bus 3. The operation state of the electric energy storage unit 6 in different modes of the energy storage system 1 will be described later.

The control module 7 is electrically connected with the positive bus 31 and the negative bus 32 of the DC bus 3, the n first battery racks 5 and the second battery racks 61 and the DC/DC converters 62 of the m energy storage units 6. According to the power (or the voltage and/or the current) of the DC bus 3, the power (or the voltage and/or the current) of each first battery rack 5 and the power (or the voltage and/or the current) of the second battery rack 61 of each energy storage unit 6, the control module 7 controls the operation state of the DC/DC converter 62 of each energy storage unit 6. For example, the operation state of the DC/DC converter 62 is selectively in a bypass state or a normal working state.

The method for controlling the DC/DC converter 62 by the control module 7 according to the operation modes of the energy storage system 1 will be described as follows.

When the energy storage system 1 is operated in a standby mode, each first battery rack 5 and each second battery rack 61 have their own open circuit voltages. The magnitude of the open circuit voltage of each first battery rack 5 and the magnitude of the open circuit voltage of each second battery rack 61 are identical. Meanwhile, no current flows through each first battery rack 5 and each second battery rack 61. Under control of the control module 7, the DC/DC converter 62 is operated in the bypass state. Moreover, no power flows through the DC bus 3 of the energy storage system 1.

In a transient period when the operation mode of the energy storage system 1 is switched from the standby mode to the discharging mode, the first battery rack 5 responds immediately to mode change. The electric energy provided by the first battery rack 5 is transmitted to the DC bus 3 directly, and the voltage on the DC bus 3 is clamped to the voltage of first battery rack 5. Furthermore, due to the clamping effect of the first battery rack 5, the DC/DC converter 62 of the energy storage unit 6 needn't to respond immediately in the transient period. The first battery rack 5 responds to the power changes on the DC bus 3 and maintains the stability of the DC bus 3. Meanwhile, the power required on the DC bus 3 is provided by the first battery rack 5 and the energy storage unit 6. Due to the change in current, the power direction of the DC/DC converter 62 changes accordingly, and the power of the second battery rack 61 changes accordingly. Consequently, the power of the energy storage unit 6 is different from that at the previous moment. However, the above-mentioned power change is an inactive change, and the working state of the DC/DC converter 62 is essentially the same as that at the previous moment.

In an embodiment, the number of the first battery rack 5 is two, and the number of the energy storage unit 6 is three, that is, the number of the second battery rack 61 is three. When the energy storage system 1 is switched from the standby mode to the discharge mode, the power required on the DC bus 3 increases from standby power to 100kW. In the transient period, each of the first battery racks 5 provides 25kW of power, and the three second battery racks 61 provide a total of 50kW of power. The power provided by each first battery rack 5 is greater that the power provided by each second battery rack 61. Since the first battery rack 5 bears most of the power changes and clamps the bus voltage to maintain the stability of the DC bus, the DC/DC converter 62 needn't to respond immediately to the load step changes caused by mode switching. After the transient period is ended, each first battery rack 5 and each second battery rack 61 provide 20 kW of power.

Generally, the energy storage system 1 may be subjected to a step change. For example, when the load suddenly increases or decreases or the power grid 2 is in a low ride-through condition, the step change occurs. Due to the step change, the DC/DC converter 62 of the electric energy storage unit 6 is possibly unable to respond immediately and suffered from damage. By using the above control method, the first battery racks 5 directly coupled to the DC bus 3 can respond immediately when the step change of the energy storage system 1 occurs. As a consequence, it can be assured that the voltage of the DC bus is not changed significantly in a certain time period. In this way, the control module 7 has enough time to send current or voltage commands to the DC/DC converter 62 to absorb or discharge the battery energy and achieve the smooth transition of the step change. Due to the electric energy storage efficacy and the buffering efficacy, the energy storage system 1 can be operated at a stable output level even if the load fluctuates rapidly. Consequently, the DC/DC converter 62 can be effectively protected.

After the transient period is ended, the first battery rack 5 continuously provides the electric energy to the DC bus 3. According to the power of the DC bus 3, the power of each first battery rack 5 and the power of each second battery rack 61, the control module 7 further controls the operation state of the DC/DC converter 62 of each energy storage unit 6. For example, under control of the control module 7, the DC/DC converters 62 in a specified number of energy storage units 6 are enabled to be in the normal working state. Consequently, the electric energy provided by the corresponding second battery racks 61 will be transmitted to the DC bus 3 through the DC/DC converters 62. Meanwhile, the power required for the DC bus 3 is provided by the first battery racks 5 and the second battery racks 61. As a consequence, the discharging balance of the first battery racks 5 and the second battery racks 61 will be enhanced.

In an embodiment, the DC/DC converters 62 in the specified number of energy storage units 6 are controlled to be in the normal working state by the control module 7 according to the power supply requirements. Optionally, by adjusting the operation state of the DC/DC converter 62, the power provided from the second battery rack 61 to the DC bus 3 can be controlled by the control module 7.

In the above embodiment, the first battery racks 5 provide power to the DC bus 3 in the transient period of the mode switching process. It is noted that numerous modifications and alterations may be made while retaining the teachings of the disclosure. For example, in another embodiment, the first battery racks 5 and the second battery racks 61 provide power to the DC bus 3 in the transient period of the mode switching process. However, the power provided by each second battery rack 61 is lower than the power provided by each first battery rack 5.

For well understanding the concepts of the present disclosure, two implementation examples will be described as follows.

In a first implementation example, the energy storage system 1 includes two first battery racks 5 and three energy storage units 6. That is, n=2, and m=3. It is assumed that the required power for the DC bus 3 is 100kW. In the transient period when the operation mode of the energy storage system 1 is switched from the standby mode to the discharging mode, the two first battery racks 5 provides a total of 100kW to the DC bus 3. That is, each first battery rack 5 provides 50kW to the DC bus 3. Consequently, the voltage of the DC bus 3 is not changed significantly. After the transient period is ended, the two first battery racks 5 and three second battery racks 61 provides a total of 100kW to the DC bus 3. That is, each of the two first battery racks 5 and three second battery racks 61 provides 20kW to the DC bus 3.

In a second implementation example, the energy storage system 1 includes two first battery racks 5 and three energy storage units 6. That is, n=2, and m=3. It is assumed that the required power for the DC bus 3 is 100kW. In the transient period when the operation mode of the energy storage system 1 is switched from the standby mode to the discharging mode, the two first battery racks 5 provides a total of 50kW to the DC bus 3, and the three second battery racks 61 provides a total of 50kW to the DC bus 3. Each first battery rack 5 provides 25kW to the DC bus 3. In other words, the power provided by each second battery rack 61 is lower than the power provided by each first battery rack 5. Consequently, the voltage of the DC bus 3 is not changed significantly. After the transient period is ended, the two first battery racks 5 and three second battery racks 61 provides a total of 100kW to the DC bus 3. That is, each of the two first battery racks 5 and the three second battery racks 61 provides 20kW to the DC bus 3.

Moreover, in a transient period when the operation mode of the energy storage system 1 is switched from the standby mode to the charging mode, the electric energy storage converter 4 provides the DC energy to the first battery racks 5 and the second battery rack 6 through the DC bus 3. The power of the energy storage unit 6 changes from the standby power to the charging power. Due to the change in current, the power of the energy storage unit 6 is different from that at the previous moment. However, the above-mentioned power change is an active change, and the status of the DC/DC converter 62 is essentially the same as that at the previous moment.

After the transient period is ended, the electric energy storage converter 4 continuously provides the DC electric energy to the first battery racks 5 through the DC bus 3. According to the power of the DC bus 3, the power of each first battery rack 5 and the power of each second battery rack 61, the control module 7 further controls the operation state of the DC/DC converter 62 of each energy storage unit 6. For example, under control of the control module 7, the DC/DC converters 62 in a specified number of energy storage units 6 are enabled to be in the normal working state. Consequently, the corresponding second battery racks 61 receive the DC electric energy from the electric energy storage converter 4 through the DC bus 3. Meanwhile, the electric energy storage converter 4 provides the DC electric energy to the first battery racks 5 and the second battery racks 61. As a consequence, the charging balance of the first battery racks 5 and the second battery racks 61 will be enhanced.

In an embodiment, the DC/DC converters 62 in the specified number of energy storage units 6 are controlled to be in the normal working state by the control module 7 according to the power supply requirements. Optionally, by adjusting the operation state of the DC/DC converter 62, the power received by the second battery rack 61 can be controlled by the control module 7.

Moreover, when the operation mode of the energy storage system 1 is switched from the charging mode to the discharging mode or when the operation mode of the energy storage system 1 is switched from the discharging mode to the charging mode, the control method is similar to that mentioned above.

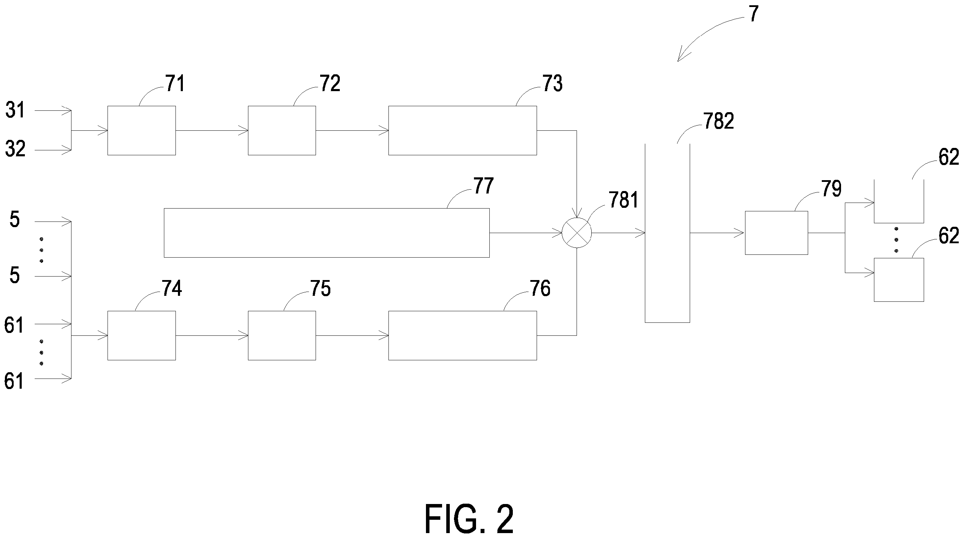

FIG. 2 is a schematic circuit block diagram illustrating the control module of the energy storage system as shown in FIG. 1. As shown in FIG. 2, the control module 7 includes a first detection unit 71, a first filtering unit 72, a first determination unit 73, a second detection unit 74, a second filtering unit 75, a second determination unit 76, a storage unit 77, a computation unit 781, a command calculation unit 782 and an amplitude limiter 79.

The first detection unit 71 is electrically connected with the positive bus 31 and the negative bus 32 of the DC bus 3. The first detection unit 71 detects a voltage signal and a current signal of the DC bus 3. According to the detection results, the first detection unit 71 generates first detection signals, such as a first current detection signal and a first voltage detection signal.

The first filtering unit 72 is electrically connected with the first detection unit 71. The first detection signal is filtered by the first filtering unit 72.

The first determination unit 73 is electrically connected with the first filter 72. According to the filtered first detection signal, the first determination unit 73 calculates the power of the DC bus 3 and determines the power flow direction of the DC bus 3. According to the determination result, the first determination unit 73 generates a first determination signal.

The second detection unit 74 is electrically connected with the n first battery racks 5 and the m second battery racks 61. The second detection unit 74 detects a voltage signal and a current signal of each first battery rack 5 and a voltage signal and a current signal of each second battery rack 61. According to the detection results, the second detection unit 74 generates second detection signals.

The second filtering unit 75 is electrically connected with the second detection unit 74. The second detection signal is filtered by the second filtering unit 74.

The second determination unit 76 is electrically connected with the second filtering unit 75. According to the filtered second detection signal, the second determination unit 76 calculates the power of each first battery rack 5 and determines the power flow direction of each first battery rack 5, and the second determination unit 76 calculates the power of each second battery rack 61 and determines the power flow direction of each second battery rack 61. According to the determination results, the second determination unit 76 generates a second determination signal.

The storage unit 77 stores default setting data. The setting data includes the record about the original battery status of the first battery rack 5, the record about the original battery status of the second battery rack 61, the record about the type of the DC/DC converter 62, and any other appropriate data.

The computation unit 781 is electrically connected with the first determination unit 73, the second determination unit 76 and the storage unit 77. After the first determination signal from the first determination unit 73, the second determination signal from the second determination unit 76 and the setting data from the storage unit 77 are computed by the computation unit 781, a power adjustment parameter is generated.

The command calculation unit 782 is electrically connected with the computation unit 781. According to the power adjustment parameter from the computation unit 781, the command calculation unit 782 generates voltage/current commands. For example, the voltage command is used for limiting the discharged/charged voltage of the second battery rack 61; and the current command is used for setting the discharged/charged power of the second battery rack 61.

The amplitude limiter 79 is electrically connected with the command calculation unit 782. The amplitudes of the voltage/current commands from the command calculation unit 782 are limited by the amplitude limiter 79. According to the amplitude-limited voltage/current commands, the operation state of the DC/DC converter 62 of each energy storage unit 6 is controlled by the control module 7.

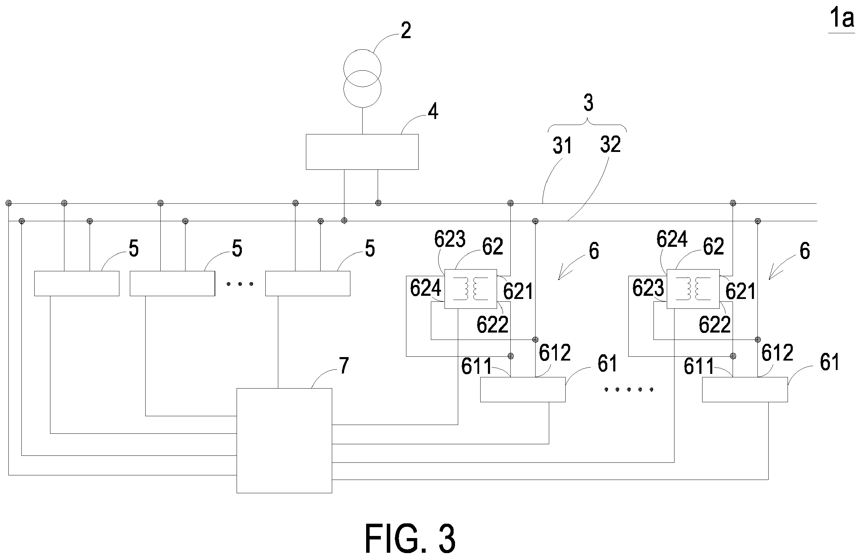

FIG. 3 is a schematic circuit diagram illustrating an energy storage system according to a second embodiment of the present disclosure. Like the first embodiment, the DC/DC converter 62 in the energy storage system 1a of this embodiment is a bidirectional isolation converter. In the first embodiment as shown in FIG. 1, the second positive terminal 623 of the DC/DC converter 62 in the energy storage system 1 is electrically connected with the positive bus 31 of the DC bus 3; and the second negative terminal 624 of the DC/DC converter 62 in the energy storage system 1 is electrically connected with the negative bus 32 of the DC bus 3. In comparison with the first embodiment, the second positive terminal 623 of the DC/DC converter 62 in the energy storage system 1a of this embodiment is electrically connected with the positive conduction terminal 611 of the second battery rack 61; and the second negative terminal 624 of the DC/DC converter 62 in the energy storage system 1a of this embodiment is electrically connected with the negative conduction terminal 612 of the second battery rack 61.

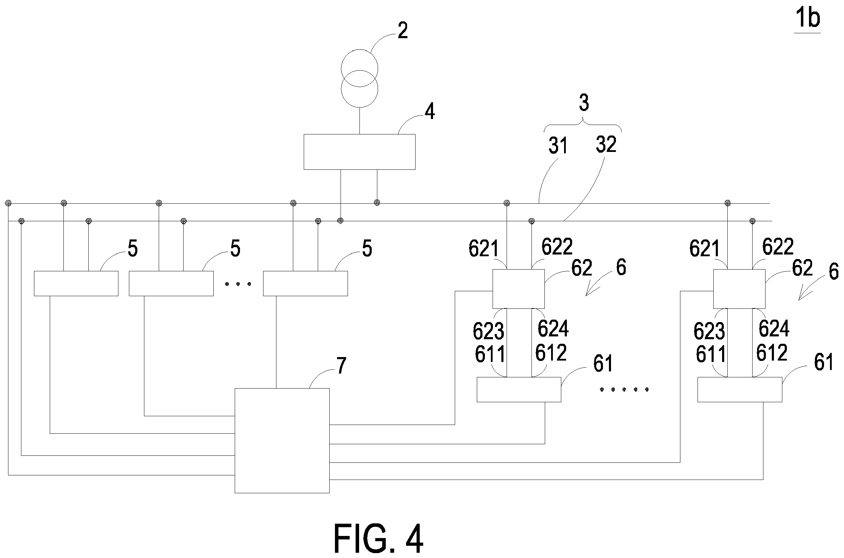

FIG. 4 is a schematic circuit diagram illustrating an energy storage system according to a third embodiment of the present disclosure. In comparison with the energy storage system 1 as shown in FIG. 1, the connecting relationship between the second battery rack 61 and the DC/DC converter 62 of the electric energy storage unit 6 and associated components are distinguished. In comparison with the first embodiment, the first positive terminal 621 and the first negative terminal 622 of the DC/DC converter 62 in the energy storage system 1b are electrically connected with the positive bus 31 and the negative bus 32 of the DC bus 3, respectively. The second positive terminal 623 and the second negative terminal 624 of the DC/DC converter 62 are electrically connected with the positive conduction terminal 611 and the negative conduction terminal 612 of the second battery rack 61, respectively. In addition, the DC/DC converter 62 of the energy storage system 1b is a bidirectional non-isolation converter. The DC/DC converter 62 in this embodiment is a full power converter with a wider voltage adjustment range. In addition, in the transient period when a step change occurs in the energy storage system, the power of the energy storage unit 6 is the same as the power at the previous moment. That is, the energy storage unit 6 will not respond to the current change on the DC bus 3, and the power is maintained and the working status is unchanged.

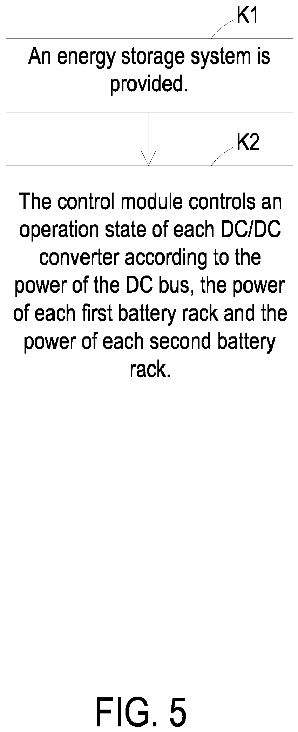

The present disclosure further provides a control method for an energy storage system. FIG. 5 illustrates a flowchart of a control method for an energy storage system according to an embodiment of the present disclosure. In a step K1, an energy storage system of the present disclosure is provided. The energy storage system includes a DC bus 3, an energy storage converter 4, n first battery racks 5, m energy storage units 6 and a control unit 7. And n and m are positive integers. The control module 7 is electrically connected with the positive bus 31 and the negative bus 32 of the DC bus 3, the n first battery racks 5 and the second battery racks 61 and the DC/DC converters 62 of the m energy storage units 6. In a step K2, the control module 7 controls an operation state of each DC/DC converter 62 according to the power of the DC bus 3, the power of each first battery rack 5 and the power of each second battery rack 61.

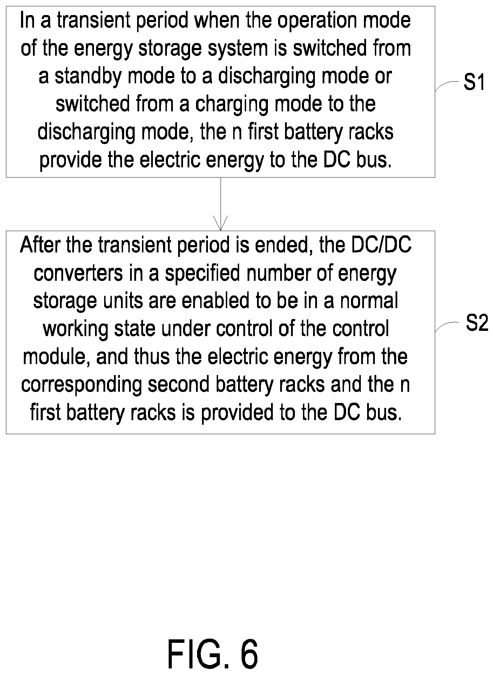

FIG. 6 illustrates a flowchart of a control method for the energy storage system of the present disclosure while the operation mode of the energy storage system is a discharging mode. In a transient period when the operation mode of the energy storage system 1 is switched from a standby mode to the discharging mode or switched from a charging mode to the discharging mode, the n first battery racks 5 provide the electric energy to the DC bus 3 directly (Step S1). After the transient period is ended, the DC/DC converters 62 of a specified number of energy storage units 6 are enabled to be in a normal working state under control of the control module 7, and thus the electric energy from the corresponding second battery racks 61 and the n first battery racks 5 is provided to the DC bus 3 (Step S2).

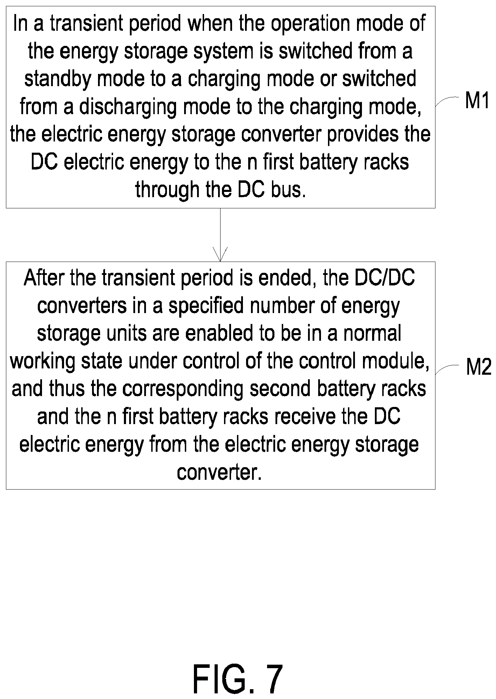

FIG. 7 illustrates a flowchart of a control method for the energy storage system of the present disclosure while the operation mode of the energy storage system is a charging mode. In a transient period when the operation mode of the energy storage system 1 is switched from a standby mode to the charging mode or switched from a discharging mode to the charging mode, the electric energy storage converter 4 provides the DC electric energy to the n first battery racks 5 through the DC bus 3 (Step M1). After the transient period is ended, the DC/DC converters 62 in a specified number of energy storage units 6 are enabled to be in a normal working state under control of the control module 7, and thus the corresponding second battery racks 61 and the n first battery racks 5 receive the DC electric energy from the electric energy storage converter 4 (Step M2).

The present disclosure provides an energy storage system. The energy storage system includes n first battery racks and m energy storage units. Each energy storage unit includes a second battery rack and a DC/DC converter. The control module controls the operation state of the DC/DC converter of each energy storage unit according to the power of the DC bus, the power of each first battery rack and the power of each second battery rack. In other words, the energy storage system of the present disclosure includes two types of topologies. In the conventional energy storage system, a plurality of battery racks are directly coupled with the DC bus. That is, the conventional energy storage system includes a single type of topology. Consequently, the energy storage system of the present disclosure is advantageous over the conventional energy storage system. In the transient period of the mode switching process, the first battery racks are charged or discharged to respond to the step change immediately. That is, in transient period of the mode switching process, the energy storage unit does not need to actively provide the electric energy or does not need to actively receive the DC electric energy from the energy storage converter. Consequently, the DC/DC converter can be effectively protected. Moreover, the voltage fluctuation on the DC bus is reduced, and the disturbance of the overall energy storage system is reduced. After the transient period is ended, the energy storage unit can stably provide the electric energy or receive the electric energy. Consequently, the output of the electric energy from the overall energy storage system can be maintained in the stable condition.

Generally, grid fluctuations are generated because of voltage spikes of loads, voltage drops or external disturbances. Since the architecture of the energy storage system of the present disclosure is specially designed, the damage caused by the grid fluctuations can be effectively avoided. Consequently, the quality and the reliability of the electric power are enhanced. Especially, in case that the energy storage system of the present disclosure is not connected with the power grid, the energy storage system can be operated independently. Furthermore, since the energy storage system can perform reactive power compensation for the power grid, the power quality of the power grid is enhanced, and the wire loss is reduced.

## Claims

1. An energy storage system (1, 1a, 1b), **characterized by** comprising:
a DC bus (3) having a positive bus (31) and a negative bus (32);
an energy storage converter (4) electrically connected to the DC bus (3), and configured to convert AC electric energy from an AC source into DC electric energy, or convert DC electric energy from the DC bus (3) into AC electric energy;
n first battery racks (5), wherein n is a positive integer, and each of the n first battery racks (5) is electrically connected between the positive bus (31) and the negative bus (32) directly; and
m energy storage units (6), wherein m is a positive integer, and each of the m energy storage units (6) comprises a second battery rack (61) and a DC/DC converter (62), wherein the DC/DC converter (62) is electrically connected between the corresponding second battery rack (61) and the DC bus (3), and configured to perform electric energy conversion between the corresponding second battery rack (61) and the DC bus (3).

2. The energy storage system (1, 1a, 1b) according to claim 1, wherein in each of the m energy storage units (6), the DC/DC converter (62) comprises a first positive terminal (621), a first negative terminal (622), a second positive terminal (623) and a second negative terminal (624), and the second battery rack (61) comprises a positive conduction terminal (611) and a negative conduction terminal (612).

3. The energy storage system (1, 1a) according to claim 2, wherein the DC/DC converter (62) is a bidirectional isolation converter; and wherein the first positive terminal (621) is electrically connected with the positive bus (31), the first negative terminal (622) is electrically connected with the positive conduction terminal (611), and the negative conduction terminal (612) is electrically connected with the negative bus (32).

4. The energy storage system (1) according to claim 3, wherein the second positive terminal (623) is electrically connected with the positive bus (31), and the second negative terminal (624) is electrically connected with the negative bus (32).

5. The energy storage system (1a) according to claim 3, wherein the second positive terminal (623) is electrically connected with the positive conduction terminal (611), and the second negative terminal (624) is electrically connected with the negative conduction terminal (612).

6. The energy storage system (1b) according to claim 2, wherein the DC/DC converter (62) is a bidirectional non-isolation converter; and wherein the first positive terminal (621) is electrically connected with the positive bus (31), the first negative terminal (622) is electrically connected with the negative bus (32), the second positive terminal (623) is electrically connected with the positive conduction terminal (611), and the second negative terminal (624) is electrically connected with the negative conduction terminal (612).

7. The energy storage system (1, 1a, 1b) according to any one of claims 1-6, wherein the energy storage system (1, 1a, 1b) further comprises a control module (7), and the control module (7) is electrically connected with the DC bus (3), the n first battery racks (5) and the second battery racks (61) and the DC/DC converters (62) of the m energy storage units (6), and configured to control an operation state of the DC/DC converter (62) of each energy storage unit (6) according to a power of the DC bus (3), a power of each first battery rack (5) and a power of each second battery rack (61).

8. The energy storage system (1, 1a, 1b) according to claim 7, wherein the control module (7) comprises:
a first detection unit (71) electrically connected with the DC bus (3), and configured to detect a voltage signal and a current signal of the DC bus (3) and generate first detection signals;
a first filtering unit (72) electrically connected with the first detection unit (71), and configured to filter the first detection signals;
a first determination unit (73) electrically connected with the first filtering unit (72), configured to calculate the power of the DC bus (3) and determine a flow direction of the power of the DC bus (3) according to the filtered first detection signals, and configured to generate a first determination signal;
a second detection unit (74) electrically connected with the n first battery racks (5) and m second battery racks (61), and configured to detect a voltage signal and a current signal of each first battery rack (5) and a voltage signal and a current signal of each second battery rack (61) and generate second detection signals;
a second filtering unit (75) electrically connected with the second detection unit (74), and configured to filter the second detection signals;
a second determination unit (76) electrically connected with the second filtering unit (75), configured to calculate the power of the each first battery rack (5), determine a flow direction of the power of the each first battery rack (5), calculate the power of the each second battery rack (61) and determine a flow direction of the power of the each second battery rack (61) according to the filtered second detection signals, and configured to generate a second determination signal;
a storage unit (77) configured to store default setting data;
a computation unit (781) electrically connected with the first determination unit (73), the second determination unit (76) and the storage unit (77), and configured to compute the first determination signal, the second determination signal and the setting data, and generate a power adjustment parameter; and
a command calculation unit (782) electrically connected with the computation unit (781), and configured to generate voltage/current commands according to the power adjustment parameter.

9. The energy storage system (1, 1a, 1b) according to claim 8, wherein the control module (7) further comprises an amplitude limiter (79), and the amplitude limiter (79) is electrically connected with the command calculation unit (782), and configured to limit amplitudes of the voltage/current commands and generate amplitude-limited voltage/current commands; and wherein the control module (7) is configured to control the operation state of the DC/DC converter (62) of the each energy storage unit (6) according to the amplitude-limited voltage/current commands.

10. The energy storage system (1, 1a, 1b) according to any one of claims 1-9, wherein in a transient period when a step change occurs, the second battery racks (61) and the DC/DC converters (62) in the m energy storage units (6) keep working statuses unchanged, and the n first battery racks (5) clamp a voltage of the DC bus (3).

11. The energy storage system (1, 1a, 1b) according to any one of claims 1-10, wherein in a transient period when an operation mode of the energy storage system (1, 1a, 1b) is switched from a standby mode to a discharging mode or switched from a charging mode to the discharging mode, the n first battery racks (5) provide power to the DC bus (3) directly, and when the transient period is ended, the DC/DC converters (62) in a specified number of energy storage units (6) are enabled to be in normal working states, thereby the corresponding second battery racks (61) in the specified number of energy storage units (6) providing electric energy to the DC bus (3).

12. The energy storage system (1, 1a, 1b) according to any one of claims 1-10, wherein in a transient period when an operation mode of the energy storage system (1, 1a, 1b) is switched from a standby mode to a charging mode or switched from a discharging mode to the charging mode, the energy storage converter (4) provides power to the n first battery racks (5) through the DC bus (3), and when the transient period is ended, the DC/DC converters (62) in a specified number of energy storage units (6) are enabled to be in normal working states, thereby the corresponding second battery racks (61) in the specified number of energy storage units (6) receiving power from the electric energy storage converter (4).

13. A control method for an energy storage system (1, 1a, 1b), the energy storage system (1, 1a, 1b) comprising a DC bus (3), an energy storage converter (4), n first battery racks (5) and m energy storage units (6), the DC bus (3) having a positive bus (31) and a negative bus (32), the energy storage converter (4) being electrically connected to the DC bus (3), each of the n first battery racks (5) being electrically connected between the positive bus (31) and the negative bus (32) directly, each of the m energy storage units (6) comprising a second battery rack (61) and a DC/DC converter (62), and the DC/DC converter (62) being electrically connected between the corresponding second battery rack (61) and the DC bus (3), wherein **characterized in that** the control method comprises:
providing a control module (7), wherein the control module (7) is electrically connected with the DC bus (3), the n first battery racks (5) and the second battery racks (61) and the DC/DC converters (62) of the m energy storage units (6); and
the control module (7) controlling an operation state of the DC/DC converter (62) of each energy storage unit (6) according to a power of the DC bus (3), a power of each first battery rack (5) and a power of each second battery rack (61).

14. The control method according to claim 13, wherein the control method comprises:
in a transient period, responding a power change of the DC bus (3) by the n first battery racks (5) and keeping working statuses of the m energy storage units (6) unchanged;
when the transient period is ended, controlling a specified number of energy storage units (6) in normal working statuses.

15. The control method according to claim 13, wherein in a transient period when an operation mode of the electric energy storage system (1, 1a, 1b) is switched from a standby mode to a discharging mode or switched from a charging mode to the discharging mode, the n first battery racks (5) provide power to the DC bus (3) directly, and when the transient period is ended, enable the DC/DC converters (62) in a specified number of energy storage units (6) to be in normal working statuses, thereby the corresponding second battery racks (61) in the specified number of energy storage units (6) providing power to the DC bus (3); and
wherein in a transient period when an operation mode of the electric energy storage system (1, 1a, 1b) is switched from a standby mode to a charging mode or switched from a discharging mode to the charging mode, the electric energy storage converter (4) provides power to the n first battery racks (5) through the DC bus (3), and when the transient period is ended, enable the DC/DC converters (62) in a specified number of energy storage units (6) to be in the normal working statues, thereby the corresponding second battery racks (61) in the specified number of energy storage units (6) receiving power from the electric energy storage converter (4).
